Europäisches Patentamt

European Patent Office

Office européen des brevets

(19)

(11) **EP 1 114 873 A1**

(12) **EUROPEAN PATENT APPLICATION**

(43) Date of publication:
**11.07.2001 Bulletin 2001/28**

(51) Int Cl.7: **C22B 19/30**, C22B 3/18,
C22B 7/00, C22B 25/06

(21) Application number: **01200025.3**

(22) Date of filing: **08.01.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **07.01.2000 NL 1014041**

(71) Applicant: **Paques Bio Systems B.V.
8560 AB Balk (NL)**

(72) Inventors:
 • **Dor, Christian Xavier
  2610 Antwerpen (BE)**

 • **Janssen, Guido Hybertus renier
  1333 JR Almere (NL)**
 • **Buisman, Cees Jan Nico
  8571 RH Harich (NL)**

(74) Representative: **Jorritsma, Ruurd et al
Nederlandsch Octrooibureau
Scheveningseweg 82
P.O. Box 29720
2502 LS Den Haag (NL)**

(54) **Biological method of dezincifying galvanised scrap metal**

(57)    In a method of dezincifying galvanised steel scrap the zinc metal is dissolved in an aqueous acidic bacterial liquid medium containing sulfur, whereby zinc is precipitated as Zn-sulfide in the presence of the biological reduction of sulfur or sulfur-bearing compounds. Galvanised steel scrap is treated, for instance, in an anaerobic bioreactor.

**EP 1 114 873 A1**

## Description

### Field of the Invention

The invention relates to a method of biologically dezincing galvanized steel or detinning tin plate. The addition of elemental sulphur results in zinc sulphide or tin sulphide as the end product. There is no net consumption of electron donor.

### Background of the Invention

Increasingly, steel is protected against corrosion by employing a zinc coating. In industrialized countries, as much as about 50% of the zinc produced is used for corrosion protection. The mechanisms on which the protection against corrosion by the zinc coating are based are:

     1. The presence of $CO_2$ in the air results in the formation of a protective layer of zinc carbonate.
     2. The cathodically protective effect of zinc ensures active protection against corrosion within the range of minor damage to the coating.

The production of steel increasingly makes use of the Electric Arc Furnace (EAF) process, employing large quantities of steel scrap. The zinc of galvanized steel scrap has an adverse effect on the process and ends up in the EAF fines. The zinc-contaminated fines must be treated in a separate dezincing installation, before the iron-containing fines can be recycled again.

Tin plate (tinned iron) is likewise produced in large quantities and gives rise to tin-containing waste of which the tin could be utilized if an economical recovery process existed for it.

### Description of the Invention

The invention relates to a method of dezincing galvanized metal, especially galvanized steel waste, and/or of detinning tinned metal. To this end, the metal waste is introduced into a liquid in which the zinc or alternatively the tin is selectively brought into solution. This is effected by the slightly acidic environment in the solution. Hereinafter the invention is explained in more detail with reference to the dezincing process, although the same principles and processes apply to the detinning process.

In the dezincing solution, the following mechanism ensures that the zinc oxidizes to $Zn^{2+}$:

$$Zn^{o} + 2H^{+} \rightarrow Zn^{2+} + H_2 \qquad (1)$$

The balance of the abovementioned redox equilibrium is favourably affected by two factors:

1) The concentration of free zinc is minimized as a result of the $Zn^{2+}$ being scavenged as a zinc sulphide precipitate:

$$Zn^{2+} + S^{2-} \rightarrow ZnS \qquad (2)$$

2) The concentration of dissolved hydrogen is minimized by the presence of hydrogen-consuming bacteria.

Thus the equilibrium in reaction (1) is pushed to the right-hand side.

The required sulphide can be produced biologically from e.g. elemental sulphur and/or sulphate, as described in WO 97/29055 and in PCT/NL99/00705. According to the last-mentioned application, elemental sulphur is reduced in a bioreactor at a pH of 5-9, using hydrogen as an electron donor, to form hydrogen sulphide which can then be stripped from the reactor solution as a gas. Starting from elemental sulphur, the overall equation for the biological reduction on the basis of hydrogen becomes as follows:

$$S^{o} + H_2 \rightarrow S^{2-} + 2H^{+} \qquad (3)$$

The overall equation for the process according to the invention then becomes:

$$Zn^{o} + S^{o} \rightarrow ZnS \qquad (4)$$

The galvanized steel can thus be dezinced in an anaerobic bioreactor. This reactor can be of a conventional design. The only special requirement is that it must be possible for the waste material to be efficiently introduced thereinto: if bulky objects are involved, the reactor must be of suitable dimensions. The bacteria suitable for the reduction of sulphur can be the customary sulphur-reducing bacteria, for example those of the genera *Desulfovibrio, Desulfotomaculum, Desulfomonas, Desulfobulbus, Desulfobacter, Desulfococcus, Desulfonema, Desulfosarcina, Desulfobacterium, Desulforomas, Desulforomonas, Desulforolobus, Acidianus, Stygiolobus, Thermoproteus, Thermodiscus, Pyrobaculum,* and *Pyrodictium,* especially a mixture of bacteria of these types.

Starting up the dezincing process may require an electron donor. Suitable for this purpose are hydrogen, carbon monoxide or an organic substance such as an alcohol. Once the process is running, no further electron donor is required. During the process, sulphur is metered in, preferably in finely disperse form. Apart from elemental sulphur, other sulphur compounds such as sulphate can also be added. The molar quantity of sulphur is equal to the quantity of zinc to be recovered (see equation (4)). The sulphur concentration in the bioreactor is preferably maintained at a value of between 0.5 and 3 g/l.

The selective dissolution of zinc can be effected by limiting the residence time; this prevents the ZnS produced from being contaminated with FeS. The residence time is preferably between 4 and 12 hours.

Another way of preventing precipitation of iron sulphide by a selective reaction is that of carrying out the process at a lower pH. Thus the pH is preferably adjusted to such a level that zinc dissolves readily and iron sparingly; depending on the further composition of the reactor contents, the pH is preferably between 2 and 7, in the case of dezincing more preferably between 3 and 6.5. If the biological oxidation and precipitation take place in one reactor, the pH is preferably maintained between 5 and 6.5; if these steps are carried out separately, the pH is preferably between 3 and 6, more preferably between 3.5 and 4.5.

Once the zinc has been removed to an adequate extent from the galvanized metal, the remaining metal is removed from the bioreactor. The zinc sulphide formed is removed, possibly together with sulphur and biomass, from the bioreactor by sedimentation, either continuously or batchwise. The zinc sulphide formed can be converted into zinc, for example by roasting, which produces zinc oxide and sulphur dioxide. The sulphur dioxide can be converted into sulphuric acid, which is saleable. The zinc oxide can be dissolved in dilute sulphuric acid, the zinc sulphate formed then being electrolytically converted into zinc and sulphuric acid.

**Claims**

1. Method of dezincing or detinning galvanized or tinned metal, respectively, characterized in that the galvanized or tinned metal is introduced into a liquid which contains sulphide, said sulphide in low concentration being formed by biological reduction of sulphur or sulphur-containing compounds, and the zinc sulphide or tin sulphide, respectively, formed is separated off.

2. Method according to Claim 1, wherein the liquid is thoroughly mixed.

3. Method according to Claim 1 or 2, wherein the residence time of the galvanized metal in the liquid is 4-12 hours.

4. Method according to any one of Claims 1-3, wherein the pH in the liquid is regulated to a value of between 3 and 7.

5. Method according to any one of Claims 1-4, wherein biological reduction and precipitation are carried out in the same reactor.

## EUROPEAN SEARCH REPORT

**European Patent Office**

**Application Number**

EP 01 20 0025

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A,D | WO 97 29055 A (THIOPAQ SULFUR SYSTEMS B V ;BUISMA CEES JAN NICO (NL); DIJKMAN HEN) 14 August 1997 (1997-08-14) * page 1, line 10 - page 4, line 15 * * page 5, line 16 - line 22 * --- | 1-5 | C22B19/30 C22B3/18 C22B7/00 C22B25/06 |
| A | US 5 587 079 A (ROWLEY MICHAEL V ET AL) 24 December 1996 (1996-12-24) * column 1 - column 3, line 27 * * column 9, line 26 - line 52 * --- | 1-5 | |
| A | US 5 278 069 A (FASS RAPHAEL ET AL) 11 January 1994 (1994-01-11) --- | | |
| A | EP 0 755 730 A (COMMISSARIAT ENERGIE ATOMIQUE) 29 January 1997 (1997-01-29) --- | | |
| A | DATABASE WPI Section Ch, Week 198216 Derwent Publications Ltd., London, GB; Class E16, AN 1982-32653E XP002165615 & SU 836 174 A (SIBE METAL INST), 7 June 1981 (1981-06-07) * abstract * ----- | 1 | **TECHNICAL FIELDS SEARCHED (Int.Cl.7)** C22B |

The present search report has been drawn up for all claims

| Place of search | Date of completion of the search | Examiner |
|---|---|---|
| THE HAGUE | 19 April 2001 | Bombeke, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                        EP 01 20 0025

This annex lists the patent family members relating to the patent documents cited in the above-mentioned European search report.
The members are as contained in the European Patent Office EDP file on
The European Patent Office is in no way liable for these particulars which are merely given for the purpose of information.

19-04-2001

| Patent document cited in search report | | Publication date | Patent family member(s) | | Publication date |
|---|---|---|---|---|---|
| WO 9729055 | A | 14-08-1997 | AU | 719886 B | 18-05-2000 |
| | | | AU | 1674297 A | 28-08-1997 |
| | | | CN | 1210503 A | 10-03-1999 |
| | | | EP | 0880475 A | 02-12-1998 |
| US 5587079 | A | 24-12-1996 | NONE | | |
| US 5278069 | A | 11-01-1994 | IL | 100950 A | 10-01-1997 |
| | | | CA | 2084714 A,C | 15-08-1993 |
| | | | JP | 2106437 C | 06-11-1996 |
| | | | JP | 5227979 A | 07-09-1993 |
| | | | JP | 8008872 B | 31-01-1996 |
| EP 0755730 | A | 29-01-1997 | FR | 2737142 A | 31-01-1997 |
| SU 836174 | A | 07-06-1981 | NONE | | |

For more details about this annex : see Official Journal of the European Patent Office, No. 12/82